# EUROPEAN PATENT SPECIFICATION

(11) **EP 4 241 970 B1**
(45) Date of publication and mention of the grant of the patent: **25.12.2024**
(21) Application number: 22161223.7
(22) Date of filing: 09.03.2022
(51) Int. Cl.: B29C 70/38, B29C 70/56, B29D 99/00

(54) **APPARATUS AND METHODS FOR FIBER MAT DEPOSITION**
VORRICHTUNG UND VERFAHREN ZUR FASERMATTENABSCHEIDUNG
APPAREIL ET PROCÉDÉS DE DÉPÔT DE TAPIS DE FIBRES

(43) Date of publication of application: 13.09.2023
(73) Proprietor: LM Wind Power A/S, 6000 Kolding (DK)
(72) Inventor: KIRKEGAARD, Daniel Schlichting, 6640 Lunderskov (DK)
(74) Representative: Bardehle Pagenberg S.L.

(56) References cited:
- WO-A1-2018/208298
- US-A1- 2008 169 579
- US-A1- 2019 160 760

## Description

### FIELD

The present disclosure relates to apparatus and methods for fiber mat deposition, and particularly to apparatus for fiber mat deposition in a mold for manufacturing a shell of a wind turbine blade. The present disclosure also particularly relates to apparatus for providing fiber mats with local bespoke fiber orientation, wind turbine blades manufactured with such fiber mats, and methods for providing the same.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven") or through the use of a gearbox. This way, the generator produces electricity which can be supplied to the electrical grid.

In order to extract more energy from the wind, the size of the rotor diameter is increased by increasing the dimensions of the wind turbine blades. To reduce the overall weight of the wind turbine blades, these may generally comprise composite materials and are often manufactured with resin-infused glass fiber composites. The manufacturing of wind turbine blades using composite materials allows them to meet the requirements with respect to size, geometry, and weight. Further, fibers can be aligned with load paths, generating blades with anisotropic mechanical properties and with enhanced mechanical properties. The possibility of fiber alignment allows placing the fibers at the exact position and direction as needed to provide the component with the required stiffness and strength. However, a desired fiber alignment is not currently a fully automated process, and repeatability is challenging.

Although composite materials have significant benefits compared with other structural materials, deposition of fiber mats is a complicated process. Particularly, a mold for a wind turbine blade shell comprises areas with complicated curvatures, including doubly curved surfaces and also including (almost) vertical surfaces. When depositing fiber mats, the fiber mats buckle and display waviness. This is inherent to many manufacturing processes of fiber-reinforced composite parts and significantly affects mechanical properties such as stiffness, strength, and fatigue of the product. Even though this is a specific problem related to wind turbine blade manufacturing, but similar problems may be encountered in other technical fields as well.

To avoid such buckling and waviness, the fibers need to be placed with shear displacement. Shear means that e.g. transverse fibers may not extend along the transverse direction, but rather at an angle.

To control proper fiber deposition, the placement of the fibers is still often carried out by hand. Even if fiber mats may initially be laid out in an automated process, a subsequent manual process is often necessary to avoid the aforementioned buckling and provide products with desired mechanical properties. Inherently in a manual process, the product quality and consistency is difficult to ensure.

A manual process allows a diverse draping of the fiber layers into the production tool and results in composite components with reduced weight and locally optimized mechanical properties. The manual placement and/or alignment of the fiber mats into the production tool results in a very tedious and cumbersome task, with limited reproducible quality and high production cost. WO2018/208298 discloses the features of the respective preambles of claims 1 and 10.

For these and other reasons, it is of interest to improve fiber deposition processes and to achieve this through an automatic or semi-automatic process, for which product quality can be highly reproducible and improved.

The present disclosure provides examples of systems and methods that at least partially overcome some of the drawbacks of existing wind turbine blade manufacturing processes.

### SUMMARY

In a first aspect, an apparatus for deposition of a fiber mat on a surface is disclosed. The fiber mat has a length that extends along a laying direction and a width that extends along a transverse direction. The apparatus comprises a reel for holding a roll of the fiber mat, a first and a second roller at a corresponding first and second transverse position and a fiber mat tension compensator. The first and second rollers are configured for applying traction on the fiber mat to unroll the fiber mat from the reel in the laying direction. Further, the first roller is controlled independently from the second roller. Besides, the fiber mat tension compensator is configured to adjust a tension in the fiber mat along the transverse direction.

According to this first aspect, the apparatus, by controlling the rollers independently, allows to locally modify the alignment of the fibers in the fiber mat, whereas, at the same time, generates a fiber mat deposition substantially free from wrinkles and other surface imperfections. This is achieved by means of the combination of the rollers with the fiber mat tension compensator, which limits the accumulation of fiber downstream of the rollers. This results in a considerable reduction in the manufacturing time as compared to known approaches for fiber mat deposition over three dimensional surfaces. Further, the apparatus significantly reduces the need of manual post-deposition assistance, which at the same time, promotes a highly repeatable final product.

In another aspect, a method for depositing a fiber mat having a length and a width on a surface is provided. A roll of the fiber mat is arranged on a reel, and the method comprises rotating two or more rollers to apply traction to the fiber mat and pull the fiber mat from the reel in a laying direction. During rotation of the rollers, one of the rollers has a different speed than at least one of the other rollers to obtain a shear angle in the fiber mat. Further, the method comprises depositing the fiber mat on the surface, and adjusting the tension along the width of the fiber mat in a portion of the fiber mat between the rollers and the reel.

Throughout the present disclosure a fiber mat may be regarded as encompassing any piece of cloth of fabric comprising fibers. The fibers may be arranged in strands or rovings. The fiber may be natural or synthetic fibers and particularly may be any type of fiber suitable for fiber reinforced composites, and more particularly may be glass fibers or carbon fibers. The fibers may have a variety of different orientations e.g. the fiber mats may be uniaxial, biaxial, multi-axial or different. The fibers may be woven with different types of weaves or may be unwoven.

Throughout this disclosure, the term "shear angle" should be understood as the angle that is defined between the fibers of the mat and their original, intended direction. E.g. transverse fibers may have a shear angle that is the deviation between the original direction of the fibers (i.e. 90° orientation to the length of the fiber mat, 45° orientation to the length of the fiber mat, or others) and the actual direction of the fibers. As an example, the shear angle for fibers arranged at 45° orientation with respect to the length of the fiber mat may be defined as the actual direction of the fibers with respect to the 45° direction.

Since the fibers in a fiber mat may not be tightly connected, in examples the shear angle may be modified across the fiber mat. A positive angle of shear would be understood as a local rotation of the fibers with respect to the intended direction in counterclockwise direction, and a negative angle of shear as a local rotation of the fibers in a clockwise direction.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2A is a schematic diagram illustrating a wind turbine blade according to one example;
Figure 2B schematically illustrates an internal structure of a wind turbine blade;
Figure 2C illustrates a moulding system which may be used in the manufacture of a wind turbine blade;
Figure 3 schematically illustrates an apparatus according to one example in a first configuration;
Figure 4A schematically illustrates a top view of a portion of the fiber mat and rollers in a first example;
Figure 4B schematically illustrates a top view of a portion of the fiber mat and rollers in a first example;
Figure 4C schematically illustrates a top view of a portion of the fiber mat and rollers in a first example;
Figure 4D schematically illustrates a top view of a portion of the fiber mat and rollers in a first example;
Figure 5 schematically illustrates a fiber mat tension compensator according to one example acting on a fiber mat portion between the rollers and the reel;
Figure 6 schematically illustrates the corresponding top view of the fiber mat and the rollers of the example shown in figure 5;
Figure 7 is a flow diagram of a method for depositing fiber mat on a surface according to one example; and
Figure 8 is a flow diagram of another method for depositing fiber mat on a surface according to one example

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims.

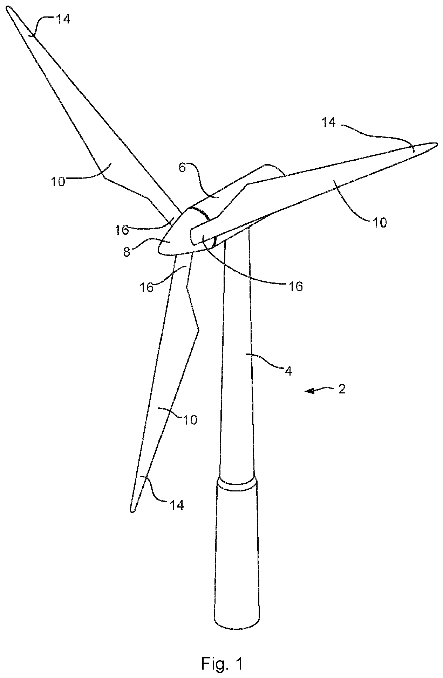

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

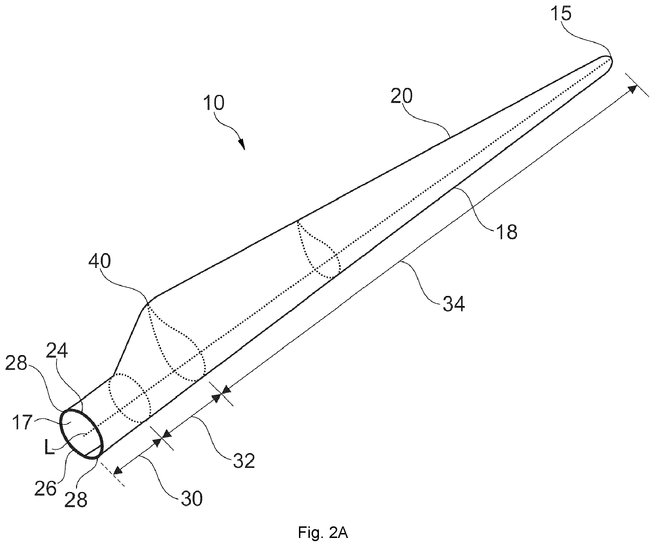

Fig. 2A shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

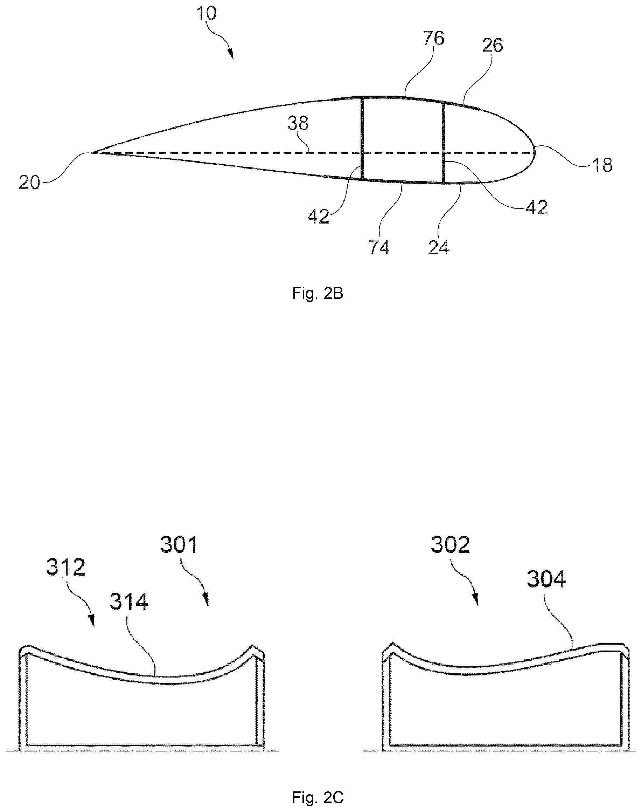

Fig. 2B is a schematic diagram illustrating a cross sectional view of an exemplary wind turbine blade 10, e.g. a cross sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

Fig. 2C is a schematic diagram illustrating an exemplary mold system for molding a blade shell of a wind turbine blade. The mold system 301 comprises a first mold 302 and a second mold 312. The first mold 302 is configured for manufacturing a first blade shell part of a wind turbine blade, such as an upwind shell part of the wind turbine blade (forming the pressure side). The second mold 312 is configured for manufacturing a second blade shell part of the wind turbine blade, such as a downwind shell part of the wind turbine blade (forming the suction side). Surfaces 304 and 314 are mold surfaces for depositing fibers.

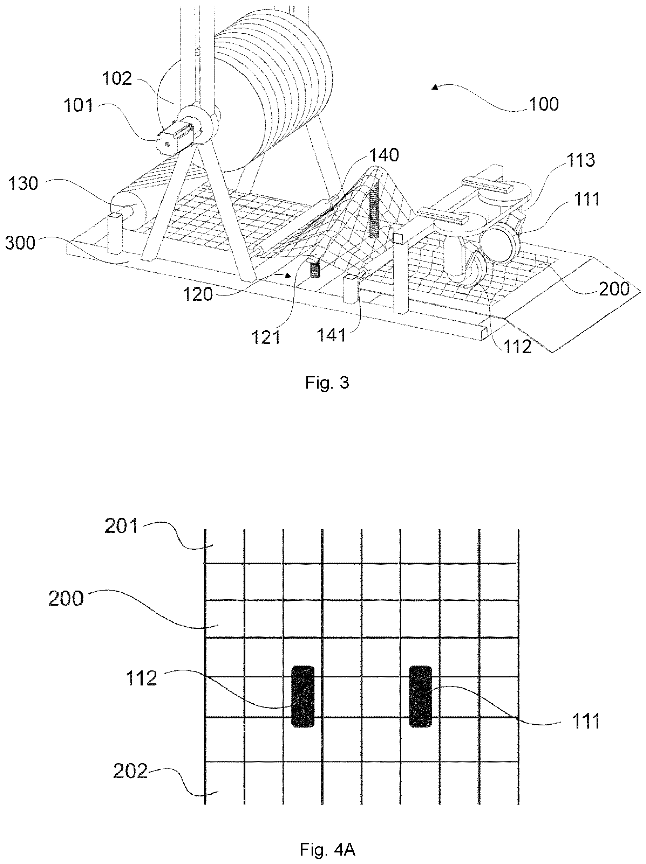

Figure 3 schematically illustrates an apparatus 100 for deposition of a fiber mat 200 on a surface according to one example. The apparatus 100 comprises a reel 101 for holding a roll 102 of the fiber mat 200. Said fiber mat 200 has a length that extends along a laying direction and a width that extends along a transverse direction. Further, the apparatus 100 comprises a first roller 111 at a first transverse position and a second roller 112 at a second transverse position. The first and second rollers 111, 112 are configured for applying traction on the fiber mat 200 to unroll the fiber mat 200 from the reel 101 in the laying direction. Additionally, the first roller 111 is controlled independently from the second roller 112. The apparatus 100 further comprises a fiber mat tension compensator 120 configured to adjust a tension in the fiber mat 200 along the transverse direction.

In order to control a shear angle, the rollers 111 and 112 may be controlled independently, in particular the rotational speed may be controlled independently. If one of the rollers rotates faster than the other one, the fast roller may exert more traction on the fibers, thus creating a shear angle. If one of the rollers rotates faster than the other one, fiber material could accumulate between the other roller and the reel 101. If the rollers have a different velocity profile the tension compensator 120 may be used to adjust tension along the transverse direction due to previous differences in rotating speed of each of the roller 111, 112. In the shown example, the fiber mat tension compensator 120 may be used to adjust a length of a trajectory between the reel and the rollers to avoid accumulation of material at one of the rollers.

The apparatus 100 allows depositing fiber mat 200 on a surface in a fast and efficient manner, and allows replicating fiber mat depositions during different runs. Thus, the apparatus 100 may increase the repeatability of the results achieved during the manufacturing of composite components. Further, since the first roller 111 is controlled independently from the second roller 112, the apparatus 100 can modify the shear angle between fibers during deposition in a continuous manner. This allows adapting the shear angle between fibers according to the particularities of the surface where the fiber is to be deposited and severely reduces fiber imperfections such as wrinkles. Further, thanks to the mitigation in fiber imperfections during deposition, operators may not need to brush the deposited fiber, or less than before and therefore, further imperfections due to the operators standing on the fiber mat are also avoided.

The example in figure 3 shows that the apparatus 100 may further comprise a frame 300 for carrying the reel 101, the first and second rollers 111, 112 and the fiber mat tension compensator 120. Said frame 300 may be displaceable along the laying direction to facilitate fiber mat deposition. Similarly, said frame 300 may comprise sub-frames for each component, i.e. the reel 101, the first and second rollers 111, 112 and the fiber mat tension compensator 120, and the sub-frames may be at least partially displaceable between each other.

Additionally, figure 3 shows that the fiber mat tension compensator 120 may be arranged between the reel 101 and the first and second rollers 111, 112. The shear angle variation that can be achieved when depositing the fiber mats depends inter alia on a distance between the reel, and the rollers and on a tension that the fiber mat tension compensator 120 can apply.

In the example illustrated in figure 3, the fiber mat tension compensator 120 comprises a fiber mat contact surface 121 and an actuator. The actuator is configured to modify the position of at least a portion of the fiber mat contact surface 121 along a vertical direction. In some examples, the actuator may comprise several independent components to locally modify the position of the fiber mat contact surface 121. In the example illustrated in figure 3, the actuator comprises two movable connections at the two ends of the fiber mat contact surface 121 respectively. The fiber mat contact surface 121 in this example is the outer surface of a cylinder.

The movable connections in figure 3 are linked to respective spring type elements. The length of the springs may be controlled to determine the vertical position of the ends of the cylinder, and therewith the inclination of the cylinder. But other arrangements may also be employed. For example, the movable connections may be arranged within a vertical guide, or may be directly connected to a guiding system operable by the actuator. The movable connections may be substantially below or above the fiber mat and may allow displacing either end of the cylinder upwards or downwards, and define an inclination of the cylinder, and thereby a tension along the transverse direction. In other examples, the actuator may comprise hydraulic pistons, pneumatic pistons, servomotors, cams or worn screws assemblies to control the position of the fiber mat contact surface 121. Further, other number and distribution of the same could be applied.

In some examples the fiber mat tension compensator 120 may comprise a cylinder as a fiber mat contact surface 121. The cylinder may be a freely rotating cylinder, a fixed cylinder or a cylinder with controlled rotation. Other type of surfaces can be used as a fiber mat contact surface 121. In some examples, the fiber mat contact surface 121 may comprise two or more portions that can be independently adjusted in height. In some other examples, the fiber mat contact surface 121 may be a compliant surface that is capable of modifying the surface shape. Compliant surfaces may have the actuator integrated below the surface to reduce space.

In the present disclosure, a vertical direction should be understood as a direction substantially perpendicular to the laying direction and the transverse direction.

In examples, the surface upon which the fiber mats may be deposited may be an inside surface of a mold for the manufacturing of a shell of a wind turbine blade, but it is clear that the herein disclosed systems and methods may be used for the manufacture of other products, in particular fiber-reinforced composite products, i.e. spar caps. After a mat has been deposited in the mold, further mats be deposited next to the mat, and on top of it. Depending on the shape and e.g. the curvature of mold, the appropriate shear angle may be defined. With the apparatus according to the example of figure 3, the corresponding shear angle may be used for deposition in an automated and precise manner.

Figure 3 also illustrates that the fiber mat tension compensator 120 may adjust fiber mat tension along the transverse direction in response to a change in speed of at least one of the rollers 111, 112. Thus, by adjusting the fiber mat tension locally, i.e. in a portion of the fiber mat 200, the fiber mat tension compensator 120 avoids the accumulation of fiber behind the rollers 111, 112. As previously discussed, the tension compensation may actuate to adjust to varying speed of the rollers 111, 112.

The example in figure 3 also shows that one or more of the first and second rollers 111, 112 may be arranged on a shaft 113. In examples, the rollers 111, 112 and the shaft 113 define a rotatable connection. Further, the shaft 113 may be substantially perpendicular to the laying direction and to the transverse direction This allows modifying an angle defined between the laying direction and the rotation direction of the rollers 111, 112. Changes in this angle can improve the deposition of fiber mat, for example in configurations where the apparatus 100 is tilted and gravity acting on the fiber mat 200 interferes with achieving a homogenous fiber mat distribution.

Furthermore, in some examples, one or more of the first and second rollers 111, 112 may be configured to be translated along the transverse direction. This allows using the apparatus 100 with fiber mats of different widths. Further, translating the rollers 111, 112 along the transverse direction allows controlling the point of maximum shear angle e.g. in examples with three or more rollers wherein the apparatus 100 generates a non-constant shear angle along the transverse direction of the fiber mat 200.

In examples, the reel 101 may comprise a drive for rotating a shaft of the reel 101 to control a tension of the fiber mat 200 on the reel 101. This allows for a more precise fiber mat deposition, as will be discussed in relation with figures 4A to 4D. Other methods for controlling the tension in the fiber mat roll 102 on the reel 101 can be envisaged as well, e.g. rollers or other elements exerting pressure on the outer surface of the fiber mat roll.

In the example of figure 3, the overall tension on the fiber mat 200 is maintained substantially constant between the two rollers 111, 112 and the reel 101. Further, figure 3 shows that an additional roller 130 may be employed to limit the transmission of shear angle caused by the two rollers 111, 112. Thus, the additional roller 130 may comprise a substantially high friction surface to prevent any spanwise variations in the fiber mat 200 to reach the reel 101. Additionally, the apparatus 100 may comprise two side rollers 140, 141 located one at each side of the fiber mat tension compensator 120 and configured to limit the vertical displacement of the fiber mat 200 caused by the fiber mat tension compensator 120 in a longitudinal direction.

Figures 4A to 4D illustrate four different examples of two rollers 111, 112 applying traction on the fiber mat 200. In figures 4A to 4D, the first fiber mat end 201 corresponds to the fiber portion that is closest to the reel 101 whereas the second fiber mat end 202 corresponds to the fiber portion that is closest to the deposition surface. Figure 4A illustrates a first example wherein the pretension exerted by the reel 101 and the fiber mat tension compensator 120 is balanced with the traction produced by the rollers 111, 112. In figure 4A, both rollers are rotating at the same speed, and therefore the shear angle 203 is zero.

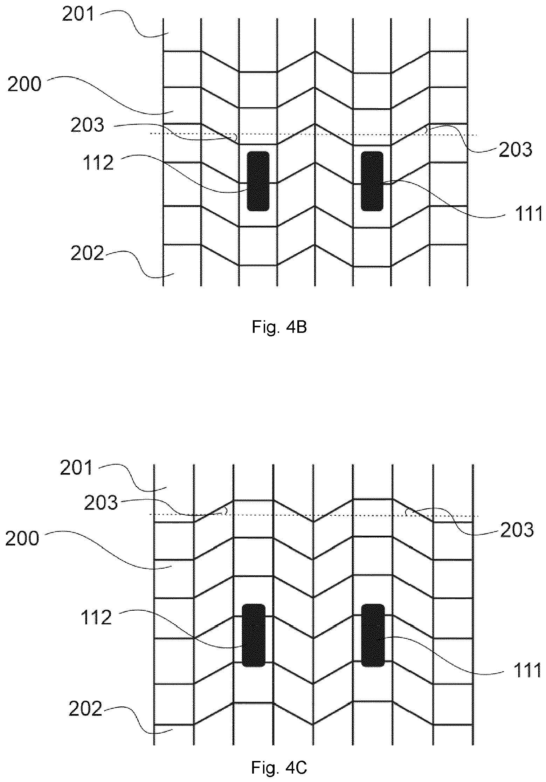

Figure 4B illustrates a second example wherein the pretension exerted by the reel 101 and the fiber mat tension compensator 120 is too high compared with the traction produced by the rollers 111, 112. This causes the fibers directly beneath the rollers 111, 112 to advance faster along the laying direction than the rest, and promotes an undesired pattern in the fiber mat 200 with negative and positive shear angles 203 along the transverse direction.

Figure 4C illustrates a third example wherein the pretension exerted by the reel 101 and the fiber mat tension compensator 120 is too low and the material has a high longitudinal stiffness. In this case, the rollers may appear to be dragging the fiber mat, and again this results in an undesired pattern in the fiber mat 200.

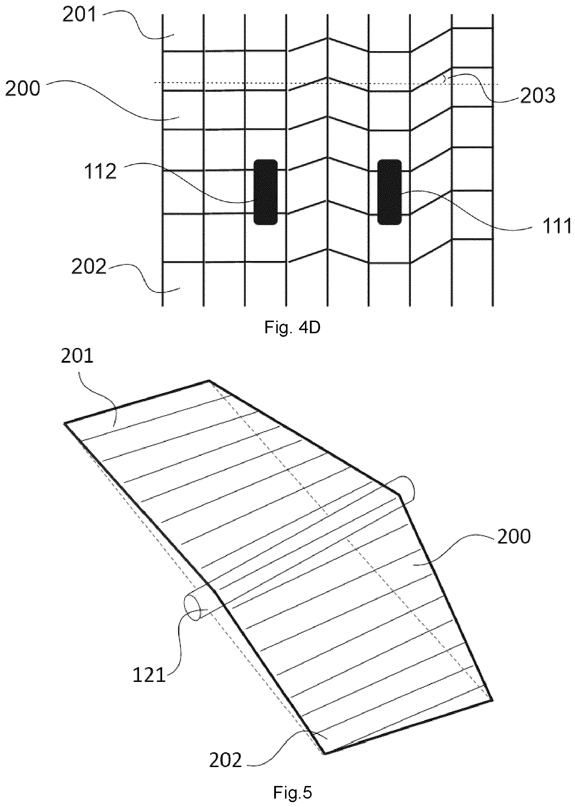

Lastly, figure 4D illustrates a fourth example wherein the pretension exerted by the reel 101 and the fiber mat tension compensator 120 is unbalanced along the transverse direction. In the example, the tension may be balanced with the traction produced by the second roller 112 but it is too high compared with the traction produced by the first roller 111. This leads to a portion of the fiber mat being deposited with the desired shear angle 203 (zero in this case) and a portion of the fiber mat being deposited with an undesired shear angle 203.

Figure 5 schematically illustrates a fiber mat tension compensator 120 acting on a fiber mat portion between the rollers 111, 112 and the reel 101 (not shown in figure 5). As in figure 4, the first fiber mat end 201 corresponds to the fiber mat portion that is closest to the reel 101 whereas the second fiber mat end 202 corresponds to the fiber mat portion that is closest to the rollers 111, 112 and deposition surface. In the illustrated example in figure 5, the type of fiber mat tension compensator 120 substantially coincides with the one illustrated in figure 3, nevertheless the following discussion is also valid for other alternatives that could be applied. The fact that the rollers 111, 112 can be independently controlled means that, if a different velocity profile is assigned to each of the rollers 111, 112, the fiber mat portion below each of them will travel at a different speed. Therefore, at a given time after operation, a certain amount of fiber mat may be accumulated behind the roller 111, 112 that has been rotating with a lower average speed.

To mitigate the effects of this fiber accumulation, the fiber mat tension compensator 120 may use one or more actuators, e.g. pistons, with more than one independent component to adjust the tension of the fiber mat along a transverse direction and more specifically, the fiber mat tension compensator 120 balances the tension difference between the reel 101 and the first and second rollers 111, 112. This is shown in figure 5, wherein a first independent component (not shown) lifts a portion of the fiber mat contact surface to compensate the difference in fiber mat length behind the rollers 111, 112. Doing so, the fiber mat tension compensator 120 adjusts a length of a path of the fiber mat 200 between the reel 101 and the first and second rollers 111, 112 as a function of the transverse position.

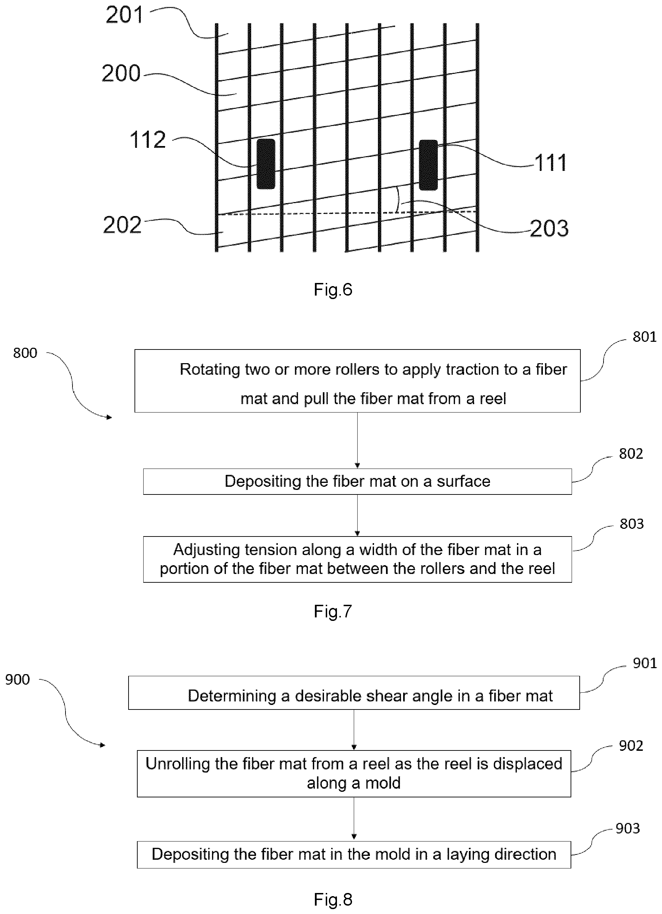

Figure 6 schematically shows a portion of the fiber mat 200 below the rollers 111, 112. Note that this figure shows a situation that can correspond with the scenario previously discussed in figure 5 or similar. In this figure, the second roller 112 is rotating at a higher speed than the first roller 111. This can be derived from the orientation of the fibers, and more precisely from the positive magnitude of the shear angle 203 of the fibers.

Figure 7 is a flow diagram of an example of a method 800 for depositing a fiber mat 200 on a surface. The fiber mat 200 of the method 800 has a length and a width, and a roll 102 of the fiber mat 200 is arranged on a reel 101. In particular, figure 7 shows that the method 800 comprises, at block 801, rotating two or more rollers 111, 112 to apply traction to the fiber mat 200 and pull the fiber mat 200 from the reel 101 in a laying direction. Further, at block 801 of the method 800, one of the rollers 111, 112 has a different speed than at least one of the other rollers 111, 112 to obtain a shear angle 203 in the fiber mat 200. Further, the method 800 also comprises, at block 802, depositing the fiber mat 200 on the surface. Additionally, the method also comprises, at block 803, adjusting tension along the width of the fiber mat 200 in a portion of the fiber mat 200 between the rollers 111, 112 and the reel 101.

In some examples, the depositing 802 the fiber mat is carried out in a mold for the manufacture of a shell of a wind turbine blade 22. Further, in some examples, the method 800 may also comprise brushing a deposited fiber mat 200 to reduce fiber mat surface irregularities. The brushing step can be performed manually or automatically.

In some further examples, the rollers 111, 112 at block 801 of the method 800 are rotated in accordance with individual speed profiles, and the individual speed profiles are determined in a simulation of a lay-up process.

Further, the method 800 may also comprise infusing the fiber mats 200 with resin and curing the resin. Particularly, vacuum assisted resin transfer molding may be used. After curing, a half blade shell may be obtained.

Figure 8 is a flow diagram of an example of another method 900 for laying fiber mat 200 in a mold for a shell of a wind turbine blade 22. The method 900 comprises, at block 901, determining a desirable shear angle 203 in the fiber mat 200. Besides, the method 900 comprises unrolling 902 the fiber mat 200 from a reel 101 as the reel 101 is displaced along the mold. Further, the method also comprises, at block 903, depositing the fiber mat 200 in the mold in a laying direction at a first transverse position, and applying a second traction in the laying direction at a second transverse position to obtain the desirable shear angle 203 in the fiber mat 200. Additionally, the method 900 also comprises, at least partially compensating 904 a tension in the fiber mat 200 along the transverse direction.

In some examples, at block 902 of the method 900, the first traction and the second traction may be applied by a first and a second roller 111, 112 respectively. Further, the first roller 111 may have a first rotational speed and the second roller 112 may have a second rotational speed, and the two speeds may be different from each other.

In some further examples, block 904 of the method 900 may comprise adjusting a length of a path of the fiber mat 200 between the reel 101 and the first and second rollers 111, 112.

In any of the examples disclosed herein, the fiber mat may comprise glass fiber or carbon fiber.

This written description uses examples to disclose the present teaching, including the preferred embodiments, and also to enable any person skilled in the art to practice it, including making and using any devices or systems and performing any incorporated methods. The patentable scope is defined by the claims.

## Claims

1. An apparatus (100) for deposition of a fiber mat (200) on a surface, the apparatus (100) comprising:
a reel (101) for holding a roll (102) of the fiber mat (200), the fiber mat (200) having a length and a width, wherein the length extends along a laying direction and the width extends along a transverse direction;
a first roller (111) at a first transverse position and a second roller (112) at a second transverse position for applying traction on the fiber mat (200) to unroll the fiber mat (200) from the reel (101) in the laying direction, wherein the first roller (111) is configured to be controlled independently from the second roller (112); and
a fiber mat tension compensator (120) configured to adjust a tension in the fiber mat (200) along the transverse direction, **characterized in that**
at least one of the first and second rollers (111, 112) is configured to be translated along the transverse direction.

2. The apparatus (100) of claim 1, wherein the fiber mat tension compensator (120) is arranged between the reel (101) and the first and second rollers (111, 112).

3. The apparatus (100) according to any of claims 1 or 2, wherein the fiber mat tension compensator (120) comprises a fiber mat contact surface (121) and an actuator, the actuator configured to modify a position of at least a portion of the fiber mat contact surface (121) along a vertical direction, the vertical direction being substantially perpendicular to the laying direction and the transverse direction.

4. The apparatus (100) according to claim 3, wherein the fiber mat contact surface (121) comprises two or more portions that can be independently adjusted in height.

5. The apparatus (100) according to any of claims 1 - 4, wherein the surface is a surface of a mold for the manufacture of a shell of a wind turbine blade or a surface of a mold for the manufacture of a spar cap of a wind turbine blade.

6. The apparatus (100) according to any of claims 1 - 5, wherein the fiber mat tension compensator (120) is configured to adjust fiber mat tension along the transverse direction in response to a change in speed of at least one of the rollers (111, 112).

7. The apparatus (100) according to any of claims 1 - 6, wherein the reel (101) comprises a drive for rotating a shaft of the reel (101) to control a tension of the fiber mat (200) on the reel (101).

8. The apparatus (100) according to any of claims 1 - 7, wherein one or more of the first and second rollers (111, 112) are rotatably arranged on a shaft (113), wherein the shaft (113) is substantially perpendicular to the laying direction and to the transverse direction.

9. The apparatus (100) according to any of claims 1 - 8, further comprising a frame (300) for carrying the reel (101), the first and second rollers (111, 112) and the fiber mat tension compensator (120), and wherein the frame (300) is displaceable along the laying direction.

10. A method (800) for depositing a fiber mat (200) having a length and a width on a surface, using the apparatus according to any of claims 1- 9, wherein the roll (102) of the fiber mat (200) is arranged on the reel (101), the method comprising:
rotating (801) the first and second rollers (111, 112) to apply traction to the fiber mat (200) and pull the fiber mat (200) from the reel (101) in a laying direction, wherein the first roller (111) has a different speed than the second roller (112) to obtain a shear angle in the fiber mat (200);
depositing (802) the fiber mat (200) on the surface; and
adjusting (803) tension along the width of the fiber mat (200) in a portion of the fiber mat (200) between the first and second rollers (111, 112) and the reel (101).

11. The method (800) according to claim 10, wherein the fiber mat (200) is deposited in a mold for the manufacture of a shell of a wind turbine blade (22).

12. The method (800) according to claim 10 or 11, further comprising brushing a deposited fiber mat (200) to reduce fiber mat surface irregularities.

13. The method (800) according to any of claims 10 - 12, wherein the rollers (111, 112) are rotated in accordance with individual speed profiles, and wherein the individual speed profiles are determined in a simulation of a lay-up process.

14. The method (800) according to any one of claims -10 - 13, wherein the method further comprises determining a desirable shear angle (203) in the fiber mat (200) prior to depositing the fiber mat.

## Patentansprüche

1. Eine Vorrichtung (100) zum Ablegen einer Fasermatte (200) auf eine Oberfläche, wobei die Vorrichtung (100) umfasst:
eine Spule (101) zum Halten einer Rolle (102) der Fasermatte (200), wobei die Fasermatte (200) eine Länge und eine Breite aufweist, wobei sich die Länge entlang einer Legerichtung und die Breite entlang einer Querrichtung erstreckt;
eine erste Walze (111) in einer ersten Querposition und eine zweite Walze (112) in einer zweiten Querposition zum Aufbringen einer Zugkraft auf die Fasermatte (200), um die Fasermatte (200) von der Rolle (101) in der Legerichtung abzurollen, wobei die erste Walze (111) so konfiguriert ist, dass sie unabhängig von der zweiten Walze (112) gesteuert wird; und
einen Fasermattenspannungskompensator (120), der so konfiguriert ist, dass er eine Spannung in der Fasermatte (200) entlang der Querrichtung einstellt, **dadurch gekennzeichnet, dass**
mindestens eine der ersten und zweiten Walzen (111, 112) so konfiguriert ist, dass sie entlang der Querrichtung verschoben wird.

2. Vorrichtung (100) nach Anspruch 1, wobei der Fasermattenspannungskompensator (120) zwischen der Spule (101) und der ersten und zweiten Walze (111, 112) angeordnet ist.

3. Vorrichtung (100) nach einem der Ansprüche 1 oder 2, wobei der Fasermattenspannungskompensator (120) eine Fasermattenkontaktfläche (121) und einen Aktuator umfasst, wobei der Aktuator so konfiguriert ist, dass er eine Position von mindestens einem Teil der Fasermattenkontaktfläche (121) entlang einer vertikalen Richtung modifiziert, wobei die vertikale Richtung im Wesentlichen senkrecht zu der Legerichtung und der Querrichtung ist.

4. Vorrichtung (100) nach Anspruch 3, wobei die Fasermatten-Kontaktfläche (121) zwei oder mehr Abschnitte umfasst, die unabhängig voneinander in der Höhe verstellt werden können.

5. Vorrichtung (100) nach einem der Ansprüche 1 bis 4, wobei die Oberfläche eine Oberfläche einer Form für die Herstellung einer Schale eines Windturbinenblatts oder eine Oberfläche einer Form für die Herstellung einer Holmkappe eines Windturbinenblatts ist.

6. Vorrichtung (100) nach einem der Ansprüche 1 bis 5, wobei der Fasermattenspannungskompensator (120) so konfiguriert ist, dass er die Fasermattenspannung entlang der Querrichtung in Reaktion auf eine Geschwindigkeitsänderung von mindestens einer der Walzen (111, 112) einstellt.

7. Vorrichtung (100) nach einem der Ansprüche 1 bis 6, wobei die Spule (101) einen Antrieb zum Drehen einer Welle der Spule (101) umfasst, um eine Spannung der Fasermatte (200) auf der Spule (101) zu steuern.

8. Vorrichtung (100) nach einem der Ansprüche 1 bis 7, wobei eine oder mehrere der ersten und zweiten Walzen (111, 112) drehbar auf einer Welle (113) angeordnet sind, wobei die Welle (113) im Wesentlichen senkrecht zur Verlegerichtung und zur Querrichtung steht.

9. Vorrichtung (100) nach einem der Ansprüche 1 bis 8, ferner umfassend einen Rahmen (300) zum Tragen der Spule (101), der ersten und zweiten Walze (111, 112) und des Fasermattenspannungskompensators (120), und wobei der Rahmen (300) entlang der Verlegerichtung verschiebbar ist.

10. Verfahren (800) zum Ablegen einer Fasermatte (200) mit einer Länge und einer Breite auf einer Oberfläche unter Verwendung der Vorrichtung nach einem der Ansprüche 1 bis 9, wobei die Rolle (102) der Fasermatte (200) auf der Spule (101) angeordnet ist, wobei das Verfahren umfasst:
Drehen (801) der ersten und zweiten Walze (111, 112), um Zugkraft auf die Fasermatte (200) auszuüben und die Fasermatte (200) von der Rolle (101) in einer Legerichtung zu ziehen, wobei die erste Walze (111) eine andere Geschwindigkeit als die zweite Walze (112) hat, um einen Scherwinkel in der Fasermatte (200) zu erhalten;
Ablegen (802) der Fasermatte (200) auf der Oberfläche; und
Einstellen (803) der Spannung entlang der Breite der Fasermatte (200) in einem Abschnitt der Fasermatte (200) zwischen der ersten und der zweiten Walze (111, 112) und der Spule (101).

11. Verfahren (800) nach Anspruch 10, wobei die Fasermatte (200) in einer Form für die Herstellung einer Schale eines Windturbinenflügels (22) abgelegt wird.

12. Verfahren (800) nach Anspruch 10 oder 11 umfasst ferner das Bürsten einer abgelegten Fasermatte (200), um Unregelmäßigkeiten der Fasermattenoberfläche zu verringern.

13. Verfahren (800) nach einem der Ansprüche 10 bis 12, wobei die Walzen (111, 112) nach individuellen Geschwindigkeitsprofilen gedreht werden, und wobei die individuellen Geschwindigkeitsprofile in einer Simulation eines Legeprozesses ermittelt werden.

14. Verfahren (800) nach einem der Ansprüche 10 bis 13, wobei das Verfahren ferner die Bestimmung eines gewünschten Scherwinkels (203) in der Fasermatte (200) vor dem Ablegen der Fasermatte umfasst.

## Revendications

1. Appareil (100) pour le dépôt d'un matelas de fibres (200) sur une surface, l'appareil (100) comprenant :
une bobine (101) pour maintenir un rouleau (102) du matelas de fibres (200) , le matelas de fibres (200) ayant une longueur et une largeur, la longueur s'étendant le long d'une direction de pose et la largeur s'étendant le long d'une direction transversale ;
un premier rouleau (111) dans une première position transversale et un second rouleau (112) dans une seconde position transversale pour appliquer une traction sur le matelas de fibres (200) afin de dérouler le matelas de fibres (200) de la bobine (101) dans la direction de pose, le premier rouleau (111) étant configuré pour être commandé indépendamment du second rouleau (112) ;et
un compensateur de tension du matelas de fibres (120) configuré pour ajuster une tension dans le matelas de fibres (200) le long de la direction transversale, **caractérisé en ce que**
au moins un des premiers et seconds rouleaux (111, 112) est configuré pour être déplacé le long de la direction transversale.

2. L'appareil (100) de la revendication 1, dans lequel le compensateur de tension du matelas de fibres (120) est disposé entre la bobine (101) et les premier et deuxième rouleaux (111, 112).

3. L'appareil (100) selon l'une des revendications 1 ou 2, dans lequel le compensateur de tension du matelas de fibres (120) comprend une surface de contact du matelas de fibres (121) et un actionneur, l'actionneur configuré pour modifier une position d'au moins une partie de la surface de contact du matelas de fibres (121) le long d'une direction verticale, la direction verticale étant sensiblement perpendiculaire à la direction de pose et à la direction transversale.

4. L'appareil (100) selon la revendication 3, dans lequel la surface de contact du tapis de fibres (121) comprend deux ou plusieurs parties dont la hauteur peut être réglée indépendamment.

5. Appareil (100) selon l'une des revendications 1 à 4, dans lequel la surface est une surface d'un moule pour la fabrication d'une coque de pale d'éolienne ou une surface d'un moule pour la fabrication d'un capuchon de longeron de pale d'éolienne.

6. L'appareil (100) selon l'une des revendications 1 à 5, dans lequel le compensateur de tension du matelas de fibres (120) est configuré pour ajuster la tension du matelas de fibres le long de la direction transversale en réponse à un changement de vitesse d'au moins un des rouleaux (111, 112).

7. L'appareil (100) selon l'une des revendications 1 à 6, dans lequel la bobine (101) comprend un entraînement pour faire tourner un arbre de la bobine (101) afin de contrôler la tension du matelas de fibres (200) sur la bobine (101).

8. L'appareil (100) selon l'une des revendications 1 à 7, dans lequel un ou plusieurs des premiers et seconds rouleaux (111, 112) sont disposés de manière rotative sur un arbre (113), dans lequel l'arbre (113) est sensiblement perpendiculaire à la direction de pose et à la direction transversale.

9. L'appareil (100) selon l'une des revendications 1 à 8, comprenant en outre un cadre (300) pour porter la bobine (101), les premier et deuxième rouleaux (111, 112) et le compensateur de tension du matelas de fibres (120), et dans lequel le cadre (300) peut être déplacé le long de la direction de pose.

10. Procédé (800) pour déposer un matelas de fibres (200) ayant une longueur et une largeur sur une surface, en utilisant l'appareil selon l'une quelconque des revendications 1 à 9, dans lequel le rouleau (102) du matelas de fibres (200) est disposé sur la bobine (101), le procédé comprenant :
faire tourner (801) le premier et le deuxième rouleau (111, 112) pour appliquer une traction sur le matelas de fibres (200) et tirer le matelas de fibres (200) de la bobine (101) dans une direction de pose, le premier rouleau (111) ayant une vitesse différente de celle du deuxième rouleau (112) pour obtenir un angle de cisaillement dans le matelas de fibres (200) ;
dépôt (802) du matelas de fibres (200) sur la surface ; et
régler (803) la tension sur la largeur du matelas de fibres (200) dans une partie du matelas de fibres (200) entre le premier et le deuxième rouleau (111, 112) et la bobine (101).

11. Procédé (800) selon la revendication 10, dans lequel le matelas de fibres (200) est déposé dans un moule pour la fabrication d'une coque de pale d'éolienne (22).

12. La méthode (800) selon la revendication 10 ou 11, comprenant en outre le brossage d'un matelas de fibres déposé (200) pour réduire les irrégularités de la surface du matelas de fibres.

13. Le procédé (800) selon l'une des revendications 10 à 12, dans lequel les rouleaux (111, 112) tournent selon des profils de vitesse individuels, et dans lequel les profils de vitesse individuels sont déterminés dans une simulation d'un processus de stratification.

14. La méthode (800) selon l'une des revendications -10 - 13, dans laquelle la méthode comprend en outre la détermination d'un angle de cisaillement souhaitable (203) dans le matelas de fibres (200) avant le dépôt du matelas de fibres.
